# EUROPEAN PATENT APPLICATION

(11) **EP 4 275 804 A1**
(43) Date of publication of application: **15.11.2023**
(21) Application number: 22172469.3
(22) Date of filing: 10.05.2022
(51) Int. Cl.: B08B 3/02, B22F 12/50, B22F 12/86, B29C 64/35

(54) **WASH STATION FOR METAL-BINDER JETTING**

(71) Applicant: Digital Metal AB, 26339 Höganäs (SE)
(72) Inventor: Malm, Niclas, 25654 Ramlösa (SE)
(74) Representative: Slingsby Partners LLP

(57) **Abstract**

A wash station (10) for cleaning a downward facing printer head (12) in metal-binder jetting is proposed. The wash station (10) comprises: a frame (16); a nozzle (20) for projecting a cleaning liquid in an upward direction; a nozzle support (18) supporting the nozzle (20), wherein the nozzle support (18) is movable relative to the frame (16). The wash station (10) further comprises: an actuator (22) configured to position the nozzle support (18) in a first position and in a second position relative to the frame (16), wherein the second position is above the first position. The wash station (10) further comprises: a lid (24) configured to transition between a closed position and a first open position at a change in position of the nozzle support (18) between the first position and the second position of the nozzle support (18), wherein the lid (24) is positioned above the nozzle (20) in the closed position and is positioned beside and/or below the nozzle (20) in the first open position.

## Description

### Technical field

The proposed technology relates to the field of additive manufacturing. The proposed technology relates specifically to wash stations for printer heads in metal-binder jetting.

### Background

Metal-binder jetting is a sinter-based additive manufacturing technique. A thin layer of a metal-containing powder is applied on a horizontally oriented printing plate. For example, this can be done by a powder dispenser positioned above and moving across the printing plate. The powder dispenser has an elongated slit that is transverse to the movement, and the powder is dispensed via the slit. An inkjet printer head imprints an ink containing a binder in the metal layer. The powder layer is heated to dry the ink, for example by a heat lamp. The printing plate rests on a printing-plate lift that lowers the printing plate, and a new layer is applied on the existing layer. The process is repeated until the complete structure has been printed. This printed structure is commonly called a green part.

The post-printing processes may vary. One example of such a process is given here. The printing plate is placed in an oven in which the green parts are heated and cured. The cured structures are commonly called brown parts. The remaining metal powder is removed from the printing plate and the brown parts. This can be done manually or by a machine. The brown parts are placed in a low-temperature furnace in which they are subjected to a combined debinding and sintering, which completes the process and provides the final structure.

Metal powder may collect on the printer head, for example if it passes through metal powder unintentionally released by the powder dispenser or by blow-back of metal powder when imprinting the ink. Metal powder can be removed from the printer head by moving the printer head to a wash station and subjecting the printer head to a cleaning liquid that washes away the metal powder.

### Object

It is an object of the proposed technology to improve the function of a wash station in metal-binder jetting. This encompasses an improved removal of metal powder from a printer head, a reduced accumulation of metal powder in the wash station, such as at its different components, and an improved removal of metal powder on components of the wash station interacting with or engaging the printer head. It is also an object of the proposed technology to avoid vertical movements of a printer head at a wash station, which allows for a more accurate positioning of the printer head when printing.

### Summary

The proposed technology aims at meeting the above-mentioned challenges. According to a first aspect of the proposed technology a wash station is provided for cleaning a downward facing printer head in, or for use in, metal-binder jetting. The wash station comprises: a frame, or station support; a nozzle for projecting, or expelling, a cleaning liquid, or washing liquid, in an upward direction; a nozzle support supporting the nozzle, wherein the nozzle support is movable relative to the frame; and an actuator configured to position the nozzle support in a first position, or lower position, and in a second position, or upper position, relative to the frame, wherein the second position is above the first position.

The wash station may further comprise: a lid configured to transition between a closed position and a first open position at a change between the first position and the second position of the nozzle support. The lid may be positioned above the nozzle, or cover the nozzle from above, in the closed position. The lid may be positioned beside and/or below the nozzle, or expose the nozzle from above, in the first open position.

It is understood that the printer head can be an inkjet printer head. It is further understood the printer head is configured, or oriented, to propel droplets of an ink in a downward direction. It is further understood that the printer head may comprise a plurality of printhead nozzles facing downwards for propelling the droplets of the ink. It is understood that the actuator is configured to move the nozzle support between the first position and the second position. The nozzle may be attached to, or fixed relative to, the nozzle support. It is further understood that the lid is configured to transition from the closed position to the first open position at a change from the first position the second position of the nozzle support. The lid may be pivotally connected to the frame.

The specified positions of the lid means that the lid covers the nozzle in the closed position. This prevents metal powder from falling onto the nozzle from above when the nozzle support is in the first position, for example when a powder dispenser passes over the wash station, thus contributing to a reduced accumulation of metal powder in the wash station.

The printer head may have a cleaning position, or washing position, relative to the wash station. The nozzle may be configured to project the cleaning liquid towards the printer head with the nozzle support in the second position and the printer head in the cleaning position.

The nozzle support may comprise an upper portion, or upper wall, positioned above the nozzle and forming an aperture, wherein the nozzle is configured, or oriented, to project the cleaning liquid through aperture.

The printer head may be positioned at the aperture in the cleaning position. The aperture may be configured to conform to the printer head, or to cover all printhead nozzles of the printer head. For example, the aperture may be elongated. This way, the aperture can conform to an elongated printer head, such as a rectangular printer head. The aperture may have a high aspect ratio, such as greater than 5:1. This means that the length of the aperture is at least five times greater than its width. Alternatively, the aperture may have a low aspect ratio, such as less than 2:1, for example to conform to square printer heads.

The lid may be configured to cover the aperture from above with the lid in the closed position.

The nozzle support may form an enclosed space, or chamber, below the upper portion of the nozzle support, wherein the aperture is open, or connected, to the enclosed space and the nozzle projects the cleaning liquid within the enclosed space.

The nozzle may be configured to project a widening, or expanding, jet of the cleaning liquid. The nozzle may be spaced apart from the aperture to form a widened, or expanded, jet of the cleaning liquid at the aperture. This allows for a cleaning of greater printer head area. It is understood that the jet can widen, or expand, withing the enclosed space.

The nozzle may be configured, oriented, to project the cleaning liquid, or the jet of the cleaning angle at an angle to the vertical. For example, the angle to the vertical may be in the range of 10° to 30°. This contributes to a horizontal component in the flow of the cleaning liquid and a less turbulent flow, which improves the removal of metal powder from the printer head.

The enclosed space may comprise a first funnel, or first sump, for collecting cleaning liquid within the enclosed space. The nozzle support may further comprise a first outlet for removing cleaning liquid within the enclosed space, or for removing cleaning liquid collected by the first funnel.

The upper portion of the nozzle support may form, or define, an upper surface facing upward. The upper surface may be planar. Further, it may be horizontal in the second position of the nozzle support. The upper surface may also be horizontal in the first position of the nozzle support. It is understood that the abovementioned aperture may be in the upper surface. The lid may be positioned beside and/or below the upper surface, or expose the upper surface from above, in the first open position.

The nozzle support may further comprise: a first seal attached to the nozzle support, the upper portion of the nozzle support, or the upper surface formed by the upper portion, and configured to prevent cleaning liquid from escaping between the printer head and the nozzle support, the upper portion of the nozzle support, or the upper surface formed by the upper portion, for example with the printer head in the cleaning position. Worded differently, the first seal may be configured to engage or seal to the printer head, for example with the printer head in the cleaning position. This contributes to a more efficient cleaning of the printer head and allows for the removed metal powder to be collected.

The first seal may be configured to conform to the printer head, and/or to enclose or surround all printhead nozzles of the printer head. For example, the first seal may be elongated. This way, the first seal can conform to an elongated printer head, such as a rectangular printer head, or to cover printhead nozzles arranged in a rectangular area. The first seal may have a high aspect ratio, such as greater than 5:1. This means that the length of the first seal is at least five times greater than its width. Alternatively, the first seal may have a low aspect ratio, such as less than 2:1, for example to conform to square printer heads.

The first seal may extend upward from the nozzle support, the upper portion of the nozzle support, or the upper surface, for example with the nozzle support in the second position. The first seal may surround the abovementioned aperture.

This means that the cleaning liquid projected by the nozzle will be retained in the enclosed space when the printer head is in the cleaning position, from which the cleaning liquid may be removed, for example through the abovementioned first outlet. This in turn allows for the removed metal powder to be collected.

The first seal may be configured to prevent cleaning liquid from escaping between the lid and the nozzle support, the upper portion of the nozzle support, or the upper surface formed by the upper portion, with the lid in the closed position. Worded differently, the second seal may be configured to engage or seal to the lid with the lid in the closed position. This allows for the nozzle and the enclosed space formed by the nozzle support to be cleaned by projecting cleaning liquid without affecting the printer head.

The nozzle support may further comprise a rake extending upward from the nozzle support, or from the upper portion of the nozzle support, or from the upper surface formed by the upper portion. It may be attached to the nozzle support, or to the upper portion of the nozzle support. The rake may be configured to engage the printer head for removing cleaning liquid from, or remaining on, the printer head. The printer head may have an initial raking position and a final raking position relative to the wash station. The rake may engage the printer head in a horizontal and/or linear transition from the initial raking position to the final raking position.

The rake may be elastic or flexible. The lid may be positioned above the rake, or cover the rake from above, in the closed position.

The rake may be elongated. As mentioned above, the aperture may also be elongated. The rake may further be angled, or slanted, relative to the elongated aperture. The rake may be oriented relative to the aperture at an angle that is less than 5°, or less than 2°. This means that if the aperture conforms to the printer head, and the printer head moves horizontally and linearly from the aperture to the rake, the rake is also angled relative to the printer head, which contributes to a smoother engagement by the rake.

The first seal may extend to a first height relative to the upper portion, or the upper surface formed by the upper portion. Similarly, the rake may extend to a second height relative to the upper portion, or the upper surface, wherein the second height is greater than the first height. This allows for the nozzle support to be lowered and disengage the first seal from the printer head and the printer head to move horizontally to engage the rake.

The actuator may be configured to position the nozzle support in a third position, or intermediate position, relative to the frame. It is understood that the actuator is configured to move the nozzle support between the first position, the second position, and the third position.

The third position may be above the first position and below the second position. The difference between the first heigh of the first seal and the second height of the rake may be greater than the difference, or distance, between the second position and the third position. This means that if the position of the nozzle support is changed from the second position to the third position, the printer head can engage the rake following a horizontal from the cleaning position toward the rake, or to the abovementioned initial raking position. This way, no vertical adjustment of the printer head is required to disengage from the first seal at the cleaning position.

The actuator may be configured to move the nozzle support vertically between the first position and the second position. Similarly, the actuator may be configured to move the nozzle support vertically between the second position and the third position.

The actuator may comprise a first linear actuator having a first fixed part connected to, or fixed relative to, the frame and a first movable part that can shift in position linearly relative to the first fixed part. The shift of the first movable part may be vertical. The actuator may further comprise a second linear actuator having a second fixed part connected, or fixed relative, to the first movable part and a second movable part that can shift in position linearly relative to the second fixed part and that is connected, or fixed relative, to the nozzle support. The shift of the second movable part may be vertical. The first movable part and the second movable part may be aligned or arranged to shift in the same direction. This means that the first linear actuator and the second linear actuator are arranged in a series for positioning the nozzle support.

The actuator may further comprise a first stop dog, or first rest, fixed relative to the frame and a second stop dog, or second rest, fixed relative to the frame.

The first movable part may have a fully retracted position relative to the first fixed part. It is understood that this position determines, or defines, a first minimum extension of the first linear actuator. The first movable part may have a fully extended position relative to the first fixed part. It is understood that this position determines, or defines, a first maximum extension of the first linear actuator. Similarly, the second movable part may have a fully retracted position relative to the second fixed part. It is understood that this position determines, or defines, a second minimum extension of the second linear actuator. The second movable part may have a fully extended position relative to the second fixed part. It is understood that this position determines, or defines, a second maximum extension of the second linear actuator.

The actuator may further comprise a first connector connected, or fixed relative, to the first movable part and configured to engage, or cooperate with, the first stop dog for determining an intermediate position of the first movable part. It is understood that the first stop dog prevents the first movable part from reaching its fully extended position. Similarly, the actuator may further comprise a second connector connected, or fixed relative to, to the second movable part and configured to engage, or cooperate with, the second stop dog for determining an intermediate position of the second movable part. It is understood that the second stop dog prevents the second movable part from reaching it fully extended position. The cooperation between the connectors and the stop dogs contribute to an accurate positioning of the nozzle support in its second and third positions. In extension, vertical adjustments of the printer head can be avoided.

The first stop dog may have an adjustable position relative to the frame. Similarly, the second stop dog may have an adjustable position relative to the frame. This allows for the positioning of the nozzle support in the second and third positions to be adjusted.

In the first position of the nozzle support, the first movable part may be in its fully retracted position and the second movable part may be in its fully retracted position. In the second position of the nozzle support, the first movable part may be in its intermediate position and the second movable part may be in its intermediate position. In the third position of the nozzle support, the first movable part may be in its intermediate position and the second movable part may be in its fully retracted position.

The abovementioned a first and second fixed parts may be pneumatic cylinders and the first and second movable parts may be cooperating pneumatic pistons.

The lid may be configured to cover the nozzle support from above, or it may be positioned above the nozzle support, with the lid in the closed position. This means that the lid prevents metal powder from falling onto the nozzle support when the nozzle support is in the first position. Alternatively worded, the lid may be configured to cover the upper portion of the nozzle support, or the upper surface formed by the upper portion, with the lid in the closed position.

The wash station may further comprise a mechanical linkage operationally connecting the nozzle support and the lid and configured to shift the lid from the closed position to the first open position at a change from the first position to the second position of the nozzle support. It may further be configured to shift the lid from the first open position to the closed position at a change from the second position to the first position of the nozzle support.

The mechanical linkage may be configured to shift the lid from the first open position to a second open position at a change from the second position to the third position of the nozzle support. It is understood that the lid is positioned beside and/or below the nozzle, the upper portion of the nozzle support, or the upper surface of the upper portion, or it may expose the nozzle, the upper portion of the nozzle support or the upper surface of the upper portion from above, in the second open position. In the closed position, the lid can be regarded as being in a closed state, and in the first and second open positions, the lid can be regarded as being in an open state.

The mechanical linkage may comprise a rigid link, a first pivot connecting the rigid link to the nozzle support, a second pivot connecting the rigid link to the lid, and a third pivot connecting the lid to the frame. It is understood that the lid and the frame may form part of the mechanical linkage.

The lid may comprise, or form, a conduit configured to convey cleaning liquid projected from the nozzle to the rake with the lid in its closed position. The conduit may have a conduit inlet at the aperture and a conduit outlet at the rake. This allows for the removal of metal powder from the rake, which could otherwise damage the printer head or clog the printhead nozzles. The conduit outlet may project the cleaning liquid toward the rake. This is particularly advantageous in combination with the second seal being configured to engage or seal to the lid with the lid in the closed position, as described above. The second seal allows for a higher pressure of cleaning liquid projected from the nozzle, which in turn allows for a greater flow of cleaning fluid that is conveyed by the conduit of the lid.

The lid may further comprise: a second seal attached to the lid and configured to prevent cleaning liquid from escaping between the lid and the nozzle support, the upper portion of the nozzle support, or the upper surface formed by the upper portion, with the lid in the closed position. Worded differently, the second seal is attached to the lid and engages or seals to the nozzle support, the upper portion of the nozzle support, or the upper surface, with the lid in the closed position. The second seal may extend downward from the lid with the lid in the closed position. The second seal may surround the rake with the lid in the closed position. The fact that the second seal is attached to the lid means that it is not present at the rake with the lid in its first or second open positions, which corresponds to the second and third positions of the nozzle support. This allows for the printer head to move unhindered from the cleaning position to the initial raking position in a horizontal movement.

As described above, the rake may be attached to the nozzle support, or the upper portion of the nozzle support. The nozzle support, or the upper portion of the nozzle support, may comprise, or form, a second funnel, or second sump, at the rake for collecting cleaning liquid conveyed to the rake. The second funnel may form part of the rake. The nozzle support, or the upper portion of the nozzle support, may comprise, or form, a second outlet for removing cleaning liquid at the rake, or for removing cleaning liquid collected by the second funnel. The second funnel may be elongated. It may be aligned with the rake and/or it may extend along the complete length of the rake.

According to a second aspect of the proposed technology, an assembly is provided comprising: a wash station according to the first aspect of the proposed technology; a printer head; and a printer head support configured to change the position of the printer head relative to the wash station. The printer head may have any of the features described above. The printer head support may be further configured to position the printer head in the abovementioned cleaning position, initial raking position, and final raking position. The printer head support may be further configured to limit the movement, or the positioning, of the printer head to a horizontal plane, which contributes to an improved accuracy in the positioning of the printer head.

The assembly may further comprise a vacuum system connected to the first outlet and/or the second outlet and configured to draw cleaning liquid from respective outlet.

### Brief description of the drawings

A more complete understanding of the abovementioned and other features and advantages of the proposed technology will be apparent from the following detailed description of an embodiment of a wash station in conjunction with the appended drawings, wherein:
Figures 1a, 1b, and 1c each show a front view of a wash station with the nozzle support in the first, second, and third position, respectively.
Figures 2a, 2b, and 2c each show a top view of the wash station with the nozzle support in the first, second, and third position, respectively.
Figures 3a, 3b, and 3c each show a side view of the wash station with the nozzle support in the first, second, and third position, respectively.
Figures 4a, 4b, and 4c each show a cross-sectional view of the wash station with the nozzle support in the first, second, and third position, respectively.
Figures 5a, 5b, and 5c each show a cross-sectional view of the top part of the wash station with the nozzle support in the first, second, and third position, respectively.
Figures 6a, 6b, and 6c each show another cross-sectional view of the wash station with the nozzle support in the first, second, and third position, respectively.
Figure 7 is a top view of the wash station with the nozzle support in the second position and the lid in the first open position.
Figure 8 is a cross sectional view of the nozzle support and the lid.
Figure 9a is a cross sectional view of the upper part of the nozzle support indicating the cleaning position of the printer head.
Figure 9b is a cross sectional view of the upper part of the nozzle support indicating the initial and final raking positions of the printer head.
Figure 10 is a cross sectional view of the lid.
Figure 11 is a cross sectional view of the upper part of the nozzle support and the lid indicating the flow of the cleaning fluid through the conduit of the lid.

### Description of the drawings

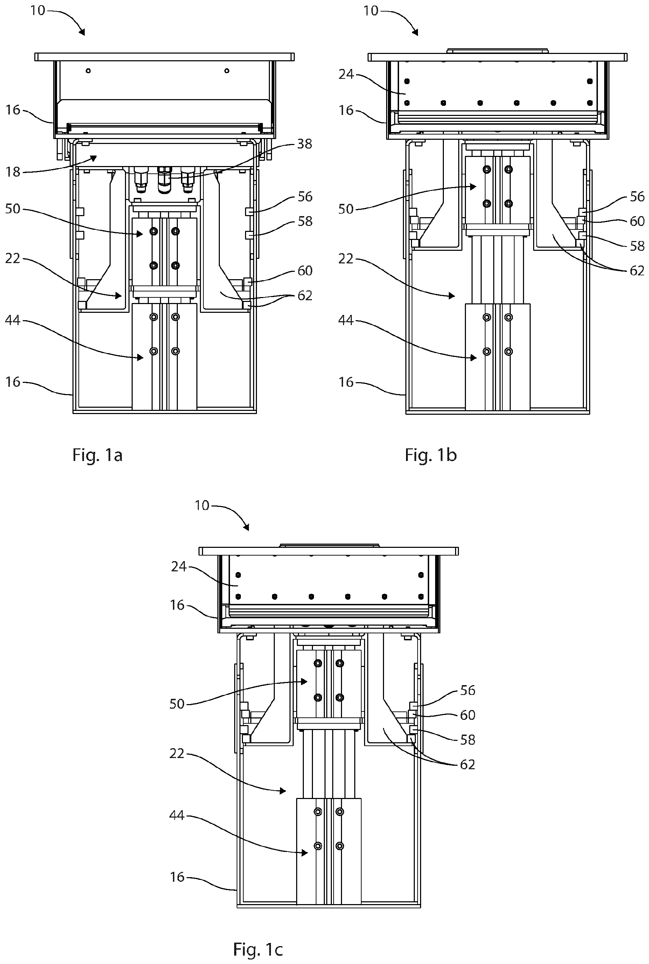

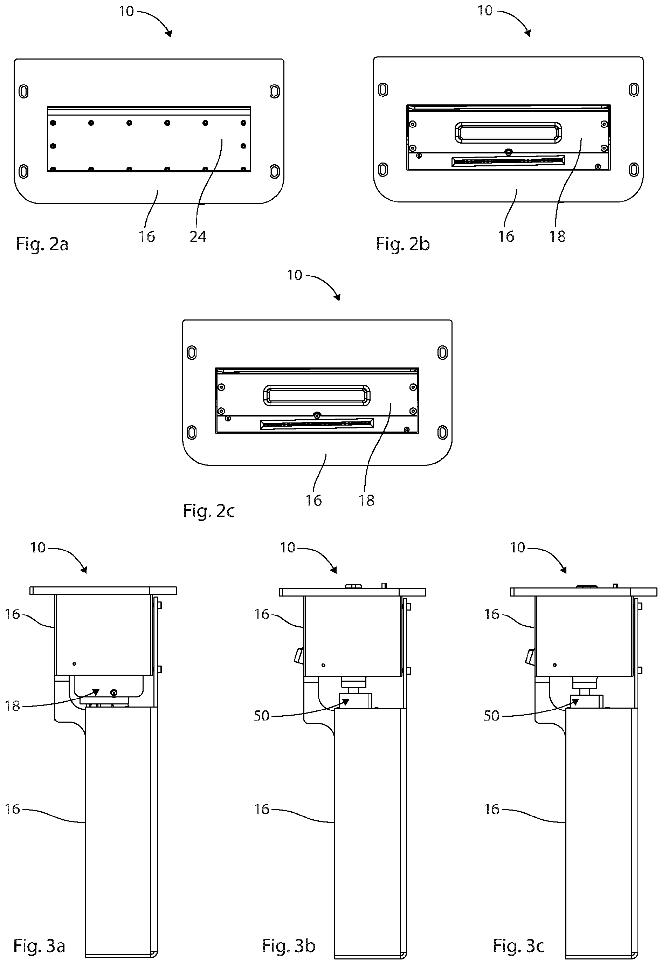

An embodiment of a wash station 10 for use in metal-binder jetting in shown in the different views of Figures 1-11. The wash station 10 is intended to clean an inkjet printer head 12 having printhead nozzles 14 that can propel droplets of an ink in a downward direction.

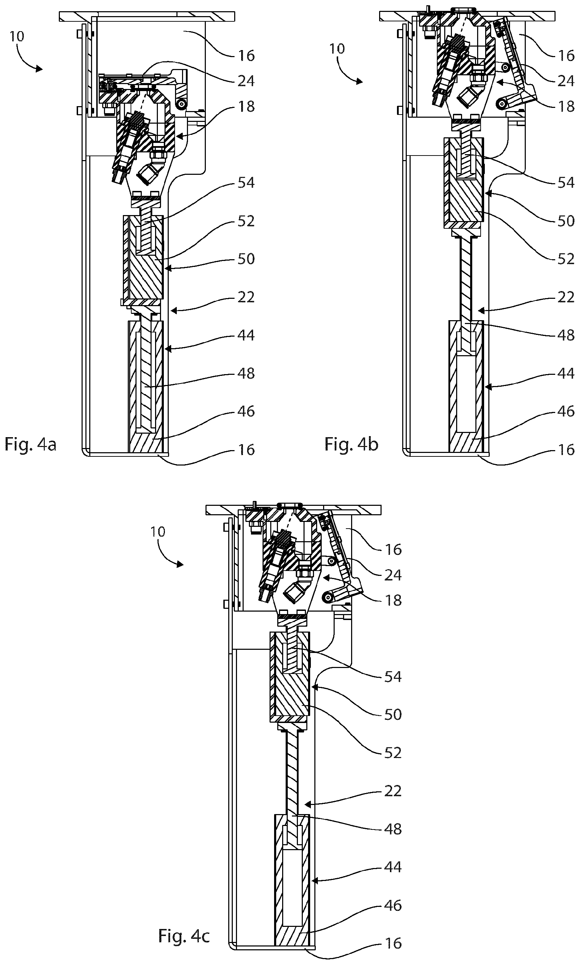

The wash station 10 has a frame 16, a nozzle support 18 that is movable relative to the frame 16 and supports a nozzle 20. The wash station 10 further has an actuator 22 that can move the nozzle support vertically between a first position, a second position, and a third position relative to the frame 16. The different positions of the nozzle support 18 are shown in Figures 1-6, where each figure indexed 'a' shows the first position, each figure indexed 'b' shows the second position, and each figure indexed 'c' shows the third position. The second position of the nozzle support 18 is above the first position and the third position of the nozzle support 18 is above the first position and below the second position. The wash station 10 has an actuator 22 that can position the nozzle support 18 in the abovementioned positions. Details of the of the actuator are shown in Figures 4a-c.

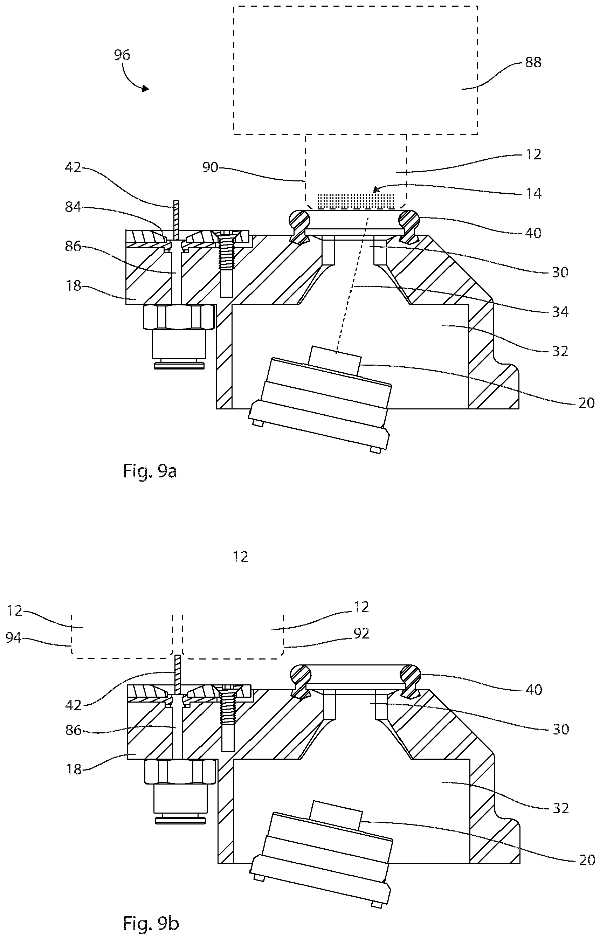

The nozzle 20 is fixed to the nozzle support 18 and is oriented so that it projects a cleaning liquid in the form of water in an upward direction to remove metal powder from the printer head 12. This function is illustrated in Figure 9a showing the nozzle support 18 in the second position and the printer head in its cleaning position 88.

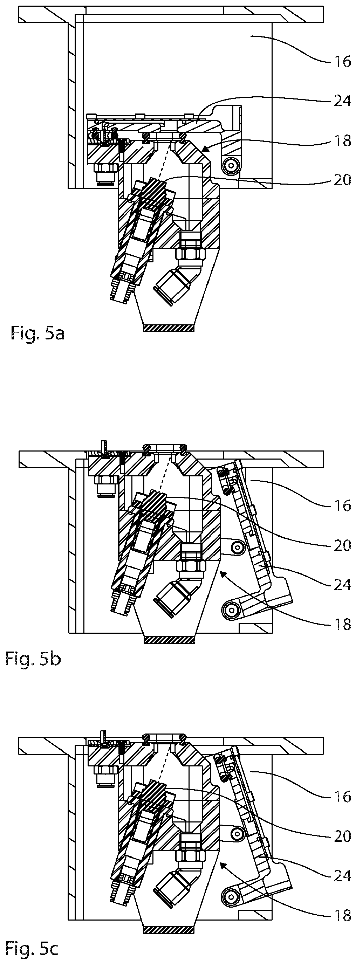

The wash station further has a lid 24 that transitions from a closed position and a first open position at a change in position of the nozzle support 18 from the first position to the second position. The lid 24 also transitions from the first open position to a second open position at a change in position of the nozzle support 18 from the second position to the third position of the nozzle support 18. These transitions are illustrated in Figures 5a-c, with Figure 5a showing the closed position, Figure 5b showing the first open position, and Figure 5c showing the second open position. The lid 24 can reach the closed position by reversing the change in position of the nozzle support 18. The first open position and the second open position of the lid 24 are essentially the same due to the small change in position caused by the mechanical linkage 64 controlling the position of the lid 24. The mechanical linkage 64 is further described below.

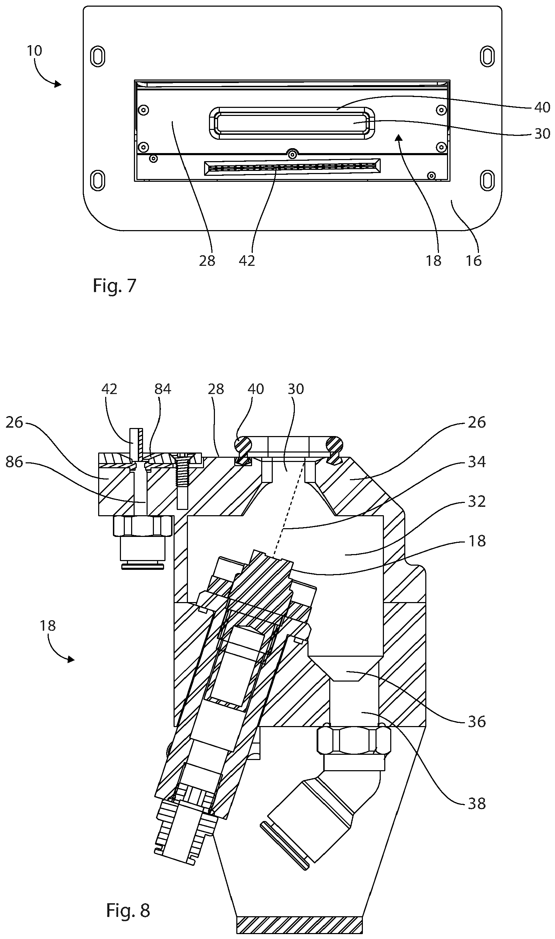

Details of the nozzle support 18 are shown in Figure 8. The nozzle support 18 has an upper portion 26 that is positioned above the nozzle 20. The upper portion 26 of the nozzle support 18 defines a planar and horizontal upper surface 28 facing upward. The upper portion 26 forms an elongated rectangular aperture 30 in the upper surface 28 having an aspect ratio of about 9:1. The printer head 12 has the corresponding shape and orientation, which means that the aperture 30 conforms to the printer head 12. The shape of the aperture is shown in Figure 7.

The nozzle support 18 forms an enclosed space 32 below the upper portion 26. The aperture 30 is open to the enclosed space 32. The nozzle 20 projects an expanding jet of the cleaning liquid within the enclosed space 32. The center of the jet 34 is indicated by a dashed line in Figure 8. The nozzle 20 is spaced apart from the aperture 30 and is oriented to project the cleaning liquid through the aperture 30 at an angle of about 20° to the vertical.

The enclosed space has a first funnel 36 formed by the nozzle support 18 that collects cleaning liquid present within the enclosed space 32. The nozzle support 18 further has a first outlet 38 that removes cleaning liquid collected by the first funnel 36.

The nozzle support 18 has a first seal 40 that is attached to the upper portion 26 and extends upward from the upper surface 28 and surrounds the aperture 30. The seal is indicated in Figures 7 and 8. The first seal 40 has an aspect ratio of about 9:1. The printer head 12 has the corresponding shape and orientation, which means that the aperture 30 conforms to the printer head 12. The shape of the first seal 40 is shown in Figure 7.

When the first seal 40 engages and seals to the printer head 12 it encloses and surrounds all printhead nozzles 14 of the printer head 12 and prevents cleaning liquid from escaping between the printer head 12 and the upper portion 26 of the nozzle support 18. The cooperation between the first seal 40 and the printer head is illustrated in Figure 9a.

The nozzle support 18 has a flexible rake 42 of silicone rubber attached to the upper portion 26 nozzle support 18 and extending upward from the upper portion 26. When the rake 42 engages the printer head 12 it removes cleaning liquid that remains on the printer head 12 after the printer head 12 has been washed by the nozzle 20. The rake 42 is elongated and has a length that exceeds the length of the printer head 12. It us slanted relative to the aperture 30 at an angle of about 1.5°, as can be seen in Figure 7.

The first seal 40 extends to a first height and the rake 42 extends to a second height relative to the upper portion 26. The second height of the rake 42 is greater than the first height of the first seal 40, as can be seen in Figure 8.

As mentioned above, the nozzle support 18 has a third position that is below the second position. The difference between the first heigh of the first seal 40 and the second height of the rake 42 is greater than the difference between the second position and the third position such that the printer head 12 can be disengaged from the first seal 40 by shifting the nozzle support 18 from the second position to the third position and move horizontally to engage the rake 42.

The actuator 22 has a first linear actuator 44 with a first fixed part 46 in the form of a pneumatic cylinder connected to the frame 16 and a first movable part 48 in the form of a pneumatic piston that can shift in position linearly and vertically relative to the first fixed part 46. The actuator also has a second linear actuator 50 with a second fixed part 52 in the form of a pneumatic cylinder fixed to the first movable part and a second movable part 54 in the form of a pneumatic piston that can shift in position linearly and vertically relative to the second fixed part 52. This way, the first linear actuator 44 and the second linear actuator are arranged in a series. The function of the actuator is shown in Figures 4a-c. A pneumatic control system (not shown) can be connected to the first linear actuator 44 and the second linear actuator 50 to control the function of the actuator 22.

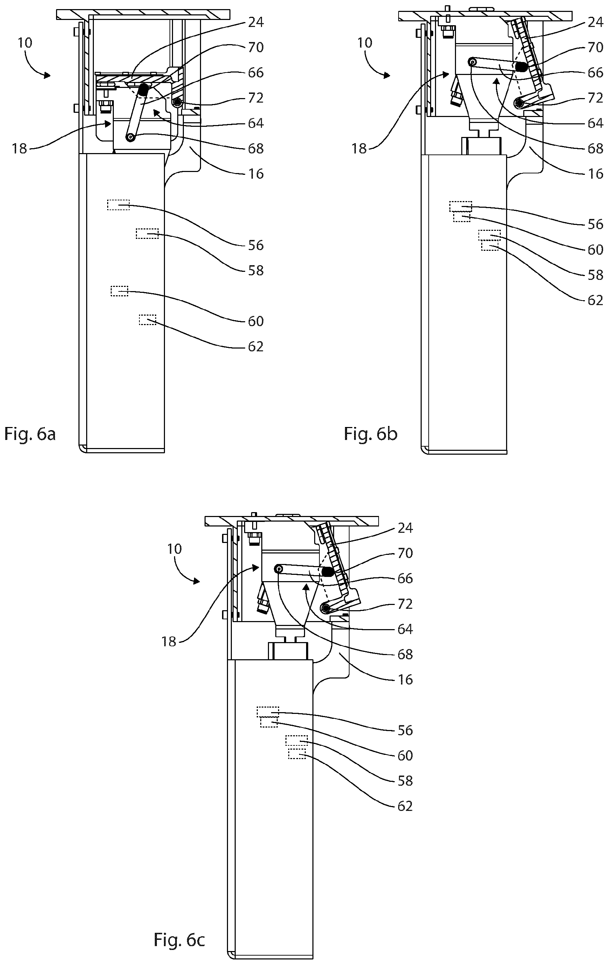

The actuator 22 has a first stop dog 56 and a second stop dog 58 that are fixed to the frame 16. These are shown in Figures 1a-c and 6a-c. The actuator 22 has a first connector 60 fixed to the first movable part 48 that can engage the first stop dog 56 and prevent the first movable part 48 from reaching its fully extended position, this way defining an intermediate position of the first movable part 48. The actuator 22 also has a second connector 62 fixed to the second movable part 54 that can engage the second stop dog 58 and prevent the second movable part 54 from reaching it fully extended position, this way defining an intermediate position of the second movable part 54.

When the nozzle support 18 is in the first position the first movable part 48 is in its fully retracted position and the second movable part 54 is in its fully retracted position. In the second position of the nozzle support 18, the first connector 60 engages the first stop dog 56 and the second connector 62 engages the second stop dog 58. In the third position of the nozzle support 18, the first connector 60 engages the first stop dog 56 and the second movable part 54 is in its fully retracted position.

The first stop dog 56 and the second stop dog 58 have an adjustable position relative to the frame 16 allowing for the second and third positions of the nozzle support 18 to be adjusted.

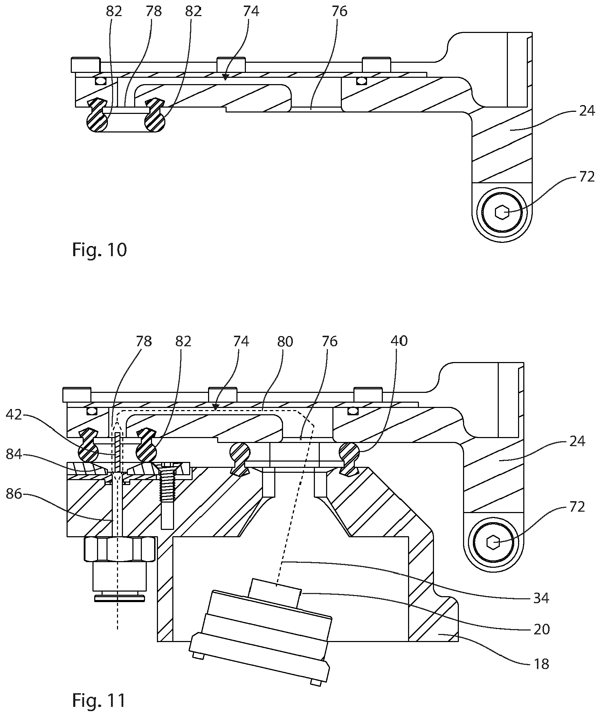

Details of the lid 24 are shown in Figure 10. The lid 24 is positioned above and covers the nozzle support 18 from above in its closed position, which can be seen in Figure 11. This means that it also covers the upper surface 28 formed by the upper portion 26 of the nozzle support, the aperture 30, and the nozzle 20.

The wash station 10 has a mechanical linkage 64 composed of the lid 24, a rigid link 66, a first pivot 68 connecting the rigid link 66 to the nozzle support 18, a second pivot connecting the rigid link 66 to the lid 24, and a third pivot 72 connecting the lid 24 to the frame 16. This is illustrated in Figures 6a-c showing the function of the mechanical linkage 64. This way, the mechanical linkage 64 operationally connects the nozzle support 18 and the lid 24 is configured to shift between the closed position and the first open position at a change between the first position and the second position of the nozzle support 18. The lid 24 is also correspondingly configured to shift the lid from the first open position to the second open position.

The lid 24 forms a conduit 74 that has a conduit inlet 76 at the aperture 30 and a conduit outlet 78 at the rake 42 when the lid 24 in its closed position. Thus, the conduit 74 is configured to convey cleaning liquid projected from the nozzle 20 to the rake 42. The flow of the cleaning liquid 80 is illustrated by dashed lines in Figure 11. The conduit outlet 78 projects the cleaning liquid toward the rake 42. This way, metal powder on the rake 42 can be removed by activating the nozzle 20. The first seal 40 engages and seals to the lid 24 when the lid 24 is in the closed position. This means that the first seal 40 is configured to prevent cleaning liquid from escaping between the lid 24 and the nozzle support 18.

The lid 24 has a second seal 82 attached to the lid 24 and extending downward from the lid 24 and surrounds the rake 42 when the lid 24 is in its closed position. The second seal 82 engages and seals to the upper portion 26 of the nozzle support 18, thus being configured to prevent cleaning liquid from escaping between the lid 24 and the nozzle support 18 at the rake 42. The fact that the second seal 82 is attached to the lid 24 means that it is not present at the rake 42 when the lid 24 is in its first or second open position, which is when the nozzle support 18 is in its second or third position.

The rake 42 is attached to the upper portion 26 of the nozzle support 18. The rake 42 forms an elongated second funnel 84 that collects cleaning liquid expelled from the conduit outlet 78. The second seal 82 surrounds the second funnel 84 when the lid 24 is in its closed position. The nozzle support 18 has a second outlet 86 that removes cleaning liquid collected by the second funnel 84.

In a specific embodiment, the above-described wash station 10 forms part of an assembly 96 that further has a printer head 12 and a printer head support 88 that is configured to change the position of and move the printer head 12 relative to the wash station 10 and to limit the positioning of the printer head 12 to a horizontal plane. The assembly further has a vacuum system (not shown) connected to the first outlet 38 and the second outlet 86 and configured to draw cleaning liquid from respective outlet 38 and 86.

The printer head support 88 can position the printer head 12 in a cleaning position 90, an initial raking position 92, and a final raking position 94, relative to the wash station 10.

In the cleaning position 90, the printer head 12 is positioned above the aperture 30 and the nozzle support 18 is moved from the first position the second position. The second position is illustrated in Figure 9a, in which the first seal 40 engages the printer head and surrounds all printhead nozzles 14 of the printer head 12. As described above, the nozzle 20 can then project cleaning liquid towards the printer head 12. The first seal 40 is disengaged from the printer head by changing the position of the nozzle support 18 to the third position.

The initial raking position 92 and the final raking position 94 of the printer head 12 are indicated in Figure 9b with the nozzle support 18 in the third position. This means that the nozzle support 18 is lower relative to the printer head 12 than in Figure 9a.

After being disengaged from the first seal 40, the printer head 12 is moved horizontally from the cleaning position 90 to the initial raking position 92. The printer head 12 is then moved horizontally from the initial raking position 92 to the final raking position 94 such that the rake 42 engages the printer head 12.

### Item list

- 10: wash station
- 12: printer head
- 14: printhead nozzles
- 16: frame
- 18: nozzle support
- 20: nozzle
- 22: actuator
- 24: lid
- 26: upper portion of nozzle support
- 28: upper surface defined by upper portion
- 30: aperture
- 32: enclosed space
- 34: jet of cleaning liquid
- 36: first funnel
- 38: first outlet
- 40: first seal
- 42: rake
- 44: first linear actuator
- 46: first fixed part
- 48: first movable part
- 50: second linear actuator
- 52: second fixed part
- 54: second movable part
- 56: first stop dog
- 58: second stop dog
- 60: first connector
- 62: second connector
- 64: mechanical linkage
- 66: rigid link
- 68: first pivot
- 70: second pivot
- 72: third pivot
- 74: conduit
- 76: conduit inlet
- 78: conduit outlet
- 80: flow of cleaning liquid
- 82: second seal
- 84: second funnel
- 86: second outlet
- 88: printer head support
- 90: cleaning position
- 92: initial raking position
- 94: final raking position
- 96: assembly

## Claims

1. A wash station (10) for cleaning a downward facing printer head (12)in metal-binder jetting, the wash station (10) comprises:
- a frame (16);
- a nozzle (20) for projecting a cleaning liquid in an upward direction;
- a nozzle support (18) supporting the nozzle (20), wherein the nozzle support (18) is movable relative to the frame (16) ;
- an actuator (22) configured to position the nozzle support (18) in a first position and in a second position relative to the frame (16), wherein the second position is above the first position; and
- a lid (24) configured to transition between a closed position and a first open position at a change between the first position and the second position of the nozzle support (18), wherein the lid (24) is positioned above the nozzle (20) in the closed position and is positioned beside and/or below the nozzle (20) in the first open position.

2. The wash station (10) according to claim 1, wherein the nozzle support (18) comprises an upper portion (26) positioned above the nozzle (20) and forming an aperture (30), wherein the nozzle (20) is configured to project the cleaning liquid through aperture (30).

3. The wash station (10) according to claim 2, wherein the lid (24) is configured to cover the aperture (30) from above with the lid (24) in the closed position.

4. The wash station (10) according to claim 3, wherein the nozzle support (18) forms an enclosed space (32) below the upper portion (26) of the nozzle support (18), the aperture (30) is open to the enclosed space (32), and the nozzle (20) projects the cleaning liquid within the enclosed space (32).

5. The wash station (10) according to claim 4, wherein the enclosed space (32) comprises a first funnel (36) for collecting cleaning liquid within the enclosed space (32).

6. The wash station (10) according to any of the claims 1 to 5, wherein the printer head (12) has a cleaning position relative to the wash station (10), the nozzle (20) is configured to project the cleaning liquid towards the printer head (12) with the nozzle support (18) in the second position and the printer head (12) in the cleaning position, and the nozzle support (18) further comprises: a first seal (40) attached to the nozzle support (18) and configured to prevent cleaning liquid from escaping between the printer head (12) and the nozzle support (18) with the printer head (12) in the cleaning position.

7. The wash station (10) according to any of the claims 2 to 6, wherein the nozzle support (18) further comprises a rake (42) attached to and extending upward from the nozzle support (18).

8. The wash station (10) according to claims 7, wherein aperture (30) is elongated, the rake (42) is elongated, and the rake (42) is angled relative to the elongated aperture (30) .

9. The wash station (10) according to claim 7, wherein the first seal (40) extends to a first height relative to the upper portion (26), the rake (42) extends to a second height relative to the upper portion (26), and the second height is greater than the first height.

10. The wash station (10) according to claim 9, wherein the actuator (22) is configured to position the nozzle support (18) in a third position relative to the frame (16), the third position is above the first position and below the second position, and the difference between the first heigh of the first seal (40) and the second height of the rake (42) is greater than the difference between the second position and the third position.

11. The wash station (10) according to any of the claims 1 to 10, wherein the lid (24) is configured to cover the nozzle support (18) from above with the lid (24) in the closed position.

12. The wash station (10) according to claim 7, wherein the lid (24) comprises a conduit (74) configured to convey cleaning liquid projected from the nozzle (20) to the rake (42) with the lid (24) in its closed position.

13. The wash station (10) according to claim 7, wherein the lid (24) further comprises: a second seal (82) attached to the lid (24) and configured to prevent cleaning liquid from escaping between the lid (24) and the nozzle support (18) with the lid (24) in the closed position.

14. The wash station (10) according to any of the claims 1 to 13, wherein the wash station (10) further comprises:
- a mechanical linkage (64) operationally connecting the nozzle support (18) and the lid (24) and configured to shift the lid (24) from the closed position to the first open position at a change from the first position to the second position of the nozzle support (18).

15. An assembly comprising:
- a wash station (10) according to any of the claims 1 to 15;
- a printer head (12); and
- a printer head support (88) configured to change the position of the printer head (12) relative to the wash station (10).
